# EUROPÄISCHE PATENTANMELDUNG

(11) **EP 4 566 743 A1**
(43) Veröffentlichungstag der Anmeldung: **11.06.2025**
(21) Anmeldenummer: 23215115.9
(22) Anmeldetag: 08.12.2023
(51) Int. Cl.: B23B 51/00, B28D 1/14, B28D 7/02

(54) **SAUGBOHRER UND ABSAUGSTUTZEN**

(71) Anmelder: Hilti Aktiengesellschaft, 9494 Schaan (LI)
(72) Erfinder: Szalai, Tibor, 6000 Kecskemét (HU); Szabó, József, 6000 Kecskemét (HU); Palásti, Bence, 6066 Tiszaalpár (HU)
(74) Vertreter: Hilti Aktiengesellschaft Corporate Intellectual Property

(57) **Zusammenfassung**

Die Erfindung betrifft einen **Saugbohrer (10)** zum Bohren von Gestein, umfassend einen Schaft (12), einen Bohrkopf und ein Einsteckende, wobei entlang des Bohrkopfs und entlang des Schafts (12) wenigstens jeweils eine Nute ausgebildet ist, wobei die Nuten im Bohrkopf sowie im Schaft (12) zumindest teilweise durch wenigstens ein Deckelement (24) bedeckt sind. Des Weiteren betrifft die Erfindung einen **Absaugstutzen** (18). Sie ermöglicht ein effizientes und komfortables Bohren in Gestein.

## Beschreibung

Die Erfindung geht aus von einem Saugbohrer zum Bohren von Gestein. Der Saugbohrer umfasst einen Schaft, einen mit dem Schaft verbundenen Bohrkopf und ein Einsteckende.

Aus der DE102021204606 A1 ist ein Saugbohrer mit einem Absaugadapter bekannt.

Bei Bohren mit der dortigen Lösung lässt es sich nicht vermeiden, dass Bohrmehl, insbesondere zu Beginn eines Bohrvorganges, freigesetzt wird. Insbesondere ist damit unklar, ob Bohrmehl, das zu Anfang des Bohrvorganges gebildet wird, noch im Bohrloch verblieben ist oder nicht. Somit sind zumindest Kontrolltätigkeiten erforderlich, um sicherstellen zu können, dass ein in das Bohrloch gesetzter Anker alle Normvorschriften zum Setzen desselben sicher erfüllt. Die zitierte Offenlegungsschrift sieht daher eine separate Anbohrkappe vor. Diese muss jedoch beweglich auf einer Hülse des Saugbohrers entlanggleiten können. Ferner versperrt sie beim Ansetzen, also gerade zu einem sehr wichtigsten Zeitpunkt zur präzisen Positionierung des Saugbohrers, die Sicht auf die Spitze des Bohrkopfs beziehungsweise auf die Bohrposition.

Aufgabe der vorliegenden Erfindung ist es daher, einen Saugbohrer sowie weitere Vorrichtungen zur Nutzung des Saugbohrers vorzustellen, die ein effizientes und komfortables Bohren in Gestein ermöglichen.

Gelöst wird die Aufgabe durch einen **Saugbohrer** zum Bohren von Gestein, umfassend einen Schaft, einen Bohrkopf und ein Einsteckende, wobei entlang des Bohrkopfs und entlang des Schafts wenigstens jeweils eine Nute ausgebildet ist, wobei die Nuten im Bohrkopf sowie im Schaft zumindest teilweise durch wenigstens ein Deckelement bedeckt sind.

Der Erfindung liegt dabei der Gedanke zugrunde, dass die Effizienz beim Bohren von Gestein gesteigert werden kann, wenn der Umfang erforderlicher Kontrolltätigkeiten minimiert werden kann. Dazu kann versucht werden, Bohrmehl über den gesamten Bohrvorgang hinweg, insbesondere zu Beginn des Bohrvorganges, aufzufangen und / oder abzusaugen. Dazu kann versucht werden, Saugöffnungen möglichst nahe an einer Spitze des Bohrkopfs auszubilden. Gleichzeitig sollte der Querschnitt der Saugöffnungen insgesamt möglichst groß sein, um einen möglichst geringen Saugwiderstand zu ermöglichen und um auch größere Partikel absaugen zu können. Beide Aspekte können durch die vorliegende Lösung erreicht werden. Durch die Ausgestaltung des Saugbohrers als Nutenbohrer, der Saugöffnungen in Form von bis in den Bohrkopf hinein reichenden Nuten aufweist, kann die Saugöffnung mit einem großen Querschnitt versehen werden. Dadurch, dasss das Deckelement wenigstens bis über einen Teil des Bohrkopfs ragt, reicht auch der durch die Nute und das Deckelement gebildete Absaugkanal bis dicht an die Spitze des Bohrkopfs heran. Somit ergibt sich eine optimierte Saugleistung von Beginn des Bohrvorganges an. Selbst direkt bei Ansetzen und Start des Bohrvorganges entstehendes Bohrmehl kann vom Absaugkanal erfasst und abgesaugt werden. So kann mit großer Sicherheit gewährleistet werden, dass im Bohrloch kein oder höchstens nur in sehr geringem Maße Bohrmehl verbleibt. Selbst Anker oder Dübel, die sonst ein separat gereinigtes Bohrloch voraussetzen, beispielsweise ein chemischer Dübel, können in der Regel unmittelbar nach dem Bohren gesetzt werden.

Der Bohrkopf kann aus einem Hartmetall ausgebildet sein. Er kann gesintert sein. Er kann an den Schaft angeschweißt und / oder gelötet sein. Denkbar ist auch, dasss der Bohrkopf mittels Formschluss mit dem Schaft verbunden ist. In letzterem Fall ist denkbar, dass der Bohrkopf lösbar, insbesondere werkzeuglos lösbar, am Schaft fixiert ist.

Das Deckelement kann einen Kopfabschnitt und einen Schaftabschnitt aufweisen. Ein maximaler Durchmesser des Schaftabschnitts kann kleiner sein als ein maximaler Durchmesser des Kopfabschnitts, sodass gewährleistet werden kann, dass zumindest das Deckelement des Schaftabschnitts sich während des Bohrens frei im Bohrloch drehen kann. Somit können Reibungsverluste während des Bohrens reduziert werden. Gegebenenfalls kann auch ein Glattschleifen der Bohrlochwand vermieden werden, sodass die Bohrlochwand nicht nachträglich wieder aufgeraut werden braucht.

Ist der Bohrkopf gesintert, ist denkbar, die wenigstens eine Nute am Bohrkopf durch Formen des Grünlings des Bohrkopfs auszubilden. Somit kann auf zusätzliche Bearbeitungsschritte, insbesondere Bohren oder Fräsen in beispielsweise Hartmetall des Bohrkopfs, verzichtet werden.

Um den Abtransport von Bohrmehl weiter zu verbessern, kann wenigstens eine Nute des Bohrkopfs mit wenigstens einer Nute des Schafts fluchten. Unter "fluchten" kann dabei verstanden werden, dass beide Nuten parallel zu einer Längsachse des Saugbohrers verlaufen und ineinander übergehen, unbeschadet davon, ob die Nuten zumindest streckenweise unterschiedlich weit außen, also mit unterschiedlichen Radialabständen von der Längsachse, verlaufen. Bohrmehl kann so über den gesamten Absaugkanal hinweg geradeaus, also parallel zur Längsachse abgesaugt werden, sodass Bohrmehl mit geringem Saugwiderstand abgesaugt werden kann.

Bei einer Klasse von Ausführungsformen kann das Deckelement wenigstens entlang des Schafts als Hülse ausgebildet sein. Die Hülse kann einfach über den Schaft übergestülpt werden, so dass auf einfache Weise alle Nuten entlang des Schafts durch die Hülse bedeckt sein können.

Bei einer weiteren Klasse von Ausführungsformen kann das Deckelement zumindest in einem Bereich eine Gitterstruktur aufweisen. Beispielsweise können am Schaft mehrere geradlinig und parallel zu einer Längsachse des Schafts verlaufende Nuten ausgebildet sein. Jede einzelne der Nuten des Schafts kann durch ein Teilelement des Deckelements und / oder durch ein separates Element des Deckelements bedeckt sein. Die Teilelemente können dann wiederum miteinander verbunden sein.

Allgemein kann das Deckelement des Schafts mehrere Teilelemente umfassen. Somit kann das Deckelement ausgebildet sein, den Schaft nicht vollständig zu überdecken, sondern lediglich teilweise. Somit kann Material eingespart werden. Reibung während des Bohrens, insbesondere zwischen dem Deckelement und einer Bohrlochwand, kann reduziert oder vermieden werden.

Denkbar ist, dass ein radial um den Schaft umlaufender Verbindungsring die einzelnen Teilelemente miteinander verbindet und / oder am Schaft fixiert. Die Teilelemente können somit zusammen mit dem Verbindungsring eine Form eines ringförmigen Gitterzauns aufweisen.

Denkbar ist weiter, dass die Teilelemente und / oder das gesamte Deckelement innerhalb einer Umfangfläche das Schafts verlaufen.

Denkbar ist, dasss wenigstens eine der Nuten durch eine Röhre ausgekleidet ist. Insbesondere kann das Deckelement wenigstens eine der Nuten als Röhre auskleiden. Dazu kann wenigstens eines der Teilelemente eine Röhrenform aufweisen. Das Teilelement und / oder das Deckelement können beispielsweise im Querschnitt dreieckig, insbesondere abgerundetdreieckig, ausgebildet sein.

Um Gewicht und / oder um CO₂ einzusparen, kann das Deckelement wenigstens in einem Abschnitt aus einem Kunststoff ausgebildet sein. Dies ist insbesondere dann besonders vorteilhaft möglich, wenn durch eine der vorangehend beschriebenen Maßnahmen eine lediglich geringe Reibung zwischen dem Deckelement und der Bohrlochwand zu erwarten ist.

Am Schaft kann ein Absaugadapter angeordnet sein. Der Absaugadapter kann dazu dienen, den entlang des Schafts ausgebildeten Absaugkanal auf einen Absaugstutzen einer Absauganlage zu führen.

Bei einer Ausführungsform kann der Absaugadapter drehfest mit dem übrigen Schaft verbunden sein. Bei einer solchen Ausführungsform kann vorgesehen sein, dass sich der Absaugadapter mitsamt dem Schaft in dem Absaugstutzen während des Bohrens dreht.

Bei einer alternativen Ausführungsform kann der Schaft drehbar im Absaugadapter aufgenommen sein.

In der Ausführungsform, bei der der Absaugadapter drehfest mit dem übrigen Schaft verbunden ist, kann der Absaugadapter wenigstens eine radial umlaufende Nute aufweisen.

Über die Nute kann der Absaugadapter und damit der Saugbohrer im Absaugstutzen gelagert sein. Auf eine Einschnürung des Schafts des Saugbohrers, an der der Saugbohrer relativ zum Absaugstutzen drehbar festgelegt werden kann, kann verzichtet werden.

In den Rahmen der Erfindung fällt des Weiteren ein **Absaugstutzen** für einen Saugbohrer der vorangehenden und / oder im Folgenden beschriebenen Art.

Am Absaugstutzen kann wenigstens einen elastischen Ring, beispielsweise einen Gummiring, sitzen. Der elastische Ring kann zur Abdichtung zwischen dem Absaugstutzen und dem Absaugadapter dienen. Er selbst kann in Radialnuten des Absaugstutzens und / oder des Absaugadapters sitzen. So kann er ferner ein versehentliches Herausgleiten des Saugbohrers aus dem Absaugstutzen verhindern.

Vorzugsweise kann der Absaugstutzen ohne bewegliche Teile ausgebildet und dadurch besonders langlebig sein. Er kann wenigstens zweiteilig sein. Insbesondere kann er aus zwei Hälften ausgebildet sein, die beispielsweise aufeinander steckbar ausgeformt sein können. Dann kann man den Saugbohrer, insbesondere zusammen mit dem Absaugadapter, werkzeuglos in den Absaugstutzen einlegen. Die Hälften können aufeinander gesteckt werden. Es benötigt dann beispielsweise keinen separaten Verriegelungsmechanismus, um den Saugbohrer in den Absaugstutzen zu führen und / oder um ihn dort gegen Herausrutschen zu sichern.

Denkbar ist auch ein Meißel, der analog zum Saugbohrer ausgebildet ist. Ein Unterschied kann sein, dass anstelle eines Bohrkopfes ein Meißelkopf vorgesehen sein kann. Der Meißelkopf kann eine punktförmige Spitze aufweisen. Bei alternativen Ausführungsformen als Flachmeißel kann der Meißelkopf eine Meißelklinge aufweisen.

In den Rahmen der Erfindung fällt des Weiteren eine **Werkzeugmaschine,** insbesondere eine meißelnde Werkzeugmaschine wie beispielsweise eine Hammerbohrmaschine oder eine Meißelmaschine, zur Bearbeitung von Gestein, mit einem Absaugstutzen, in dem ein Saugbohrer der vorangehend und / oder im Folgenden beschriebenen Art angeordnet ist.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Saugbohrer mit einem Absaugstutzen in perspektivischer Darstellung;
- Fig. 2: eine Längsschnittansicht des Saugbohrers und des Absaugstutzens gemäß Fig. 1;
- Fig. 3: eine Detailansicht aus der Schnittansicht gemäß Fig. 2;
- Fig. 4: einen alternativen Saugbohrer mit einem Absaugstutzen in perspektivischer Darstellung;
- Fig. 5 und Fig. 6: den Saugbohrer gemäß Fig. 4 ohne Deckelement mit dem Absaugadapter in perspektivischen Seitenansichten aus verschiedenen Blickrichtungen;
- Fig. 7: eine Längsschnittansicht des Saugbohrers und des Absaugstutzen gemäß Fig. 4 und
- Fig. 8 und Fig. 9: Querschnittsansichten von Saugbohrern mit verschiedenen Varianten von Deckelementen.

In der nachfolgenden Beschreibung der Figuren werden zur Erleichterung des Verständnisses der Erfindung für gleiche oder sich funktional entsprechende Elemente jeweils die gleichen Bezugszeichen verwendet.

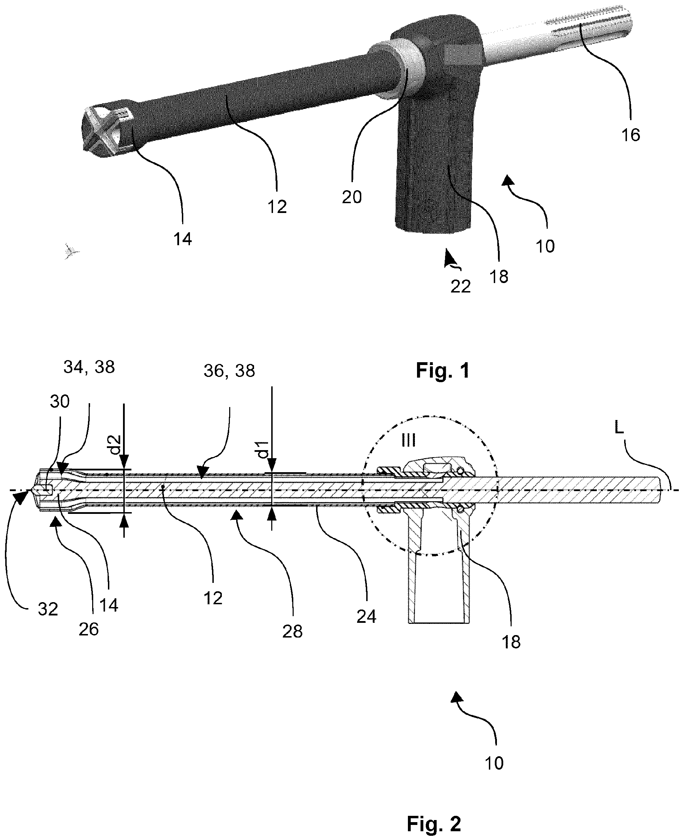

**Fig. 1** zeigt einen Saugbohrer **10** mit einem Schaft **12,** an dem an einem Ende ein Bohrkopf **14** und am anderen Ende ein Einsteckende **16** ausgebildet sind. Der Saugbohrer 10 ist mit einem Absaugstutzen **18** über einen Absaugadapter **20** verbunden. Ein Sauganschluss **22** des Absaugstutzens kann mit einem Saug- und / oder Blasgerät zum Absaugen von Bohrmehl und / oder zum Ausblasen von beispielsweise Bohrlöchern verbunden werden.

**Fig. 2** zeigt eine Längsschnittansicht des Saugbohrers 10 und des Absaugstutzens 18. Zu erkennen ist, dass der Schaft 12 und der Bohrkopf 14 von einem Deckelement **24** zumindest teilweise bedeckt sind. Das Deckelement 24 ist in diesem Ausführungsbeispiel einstückig ausgebildet.

Das Deckelement 24 weist einen Kopfabschnitt **26** und einen Schaftabschnitt **28** auf. Der Kopfabschnitt 26 überdeckt den Bohrkopf 14 zumindest teilweise. Insbesondere überdeckt in diesem Ausführungsbeispiel der Kopfabschnitt 26 den Bohrkopf mit Ausnahme von Schneiden **30** sowie einer Stirnseite **32.** Der Schaftabschnitt 28 überdeckt den Schaft 12 zumindest teilweise, insbesondere in einem Bereich zwischen dem Bohrkopf 14 und dem Absaugstutzen 18. Ein maximaler Durchmesser **d1** des Schaftabschnitts 28 ist kleiner als ein maximaler Durchmesser **d2** des Kopfabschnitts 26.

Entlang des Bohrkopfs 14 sind Nuten **34** und im Schaft 12 Nuten **36** ausgebildet. Die Nuten 34 im Bohrkopf 14 sowie die Nuten 36 im Schaft 12 sind zumindest teilweise durch das Deckelement 24 bedeckt. Dadurch sind zwischen dem Deckelement 24 und dem Schaft 12 Absaugkanäle **38** ausgebildet. Zur Vereinfachung der Darstellung sind lediglich jeweils eine der Nuten 34, 36 und einer der Absaugkanäle 38 mit einem Bezugszeichen versehen. Die Nuten 34, 36 und damit die Absaugkanäle 38 verlaufen, abgesehen von variierenden Radialabständen, parallel zu einer Längsachse L des Schafts 12 und des Bohrkopfs 14. Die Nuten 34 des Bohrkopfs 14 fluchten jeweils mit korrespondierenden Nuten 36 des Schafts 12.

Der Bohrkopf 14 ist aus einem Wolfram-haltigen Hartmetall gesintert. Die Nuten 34 am Bohrkopf 14 sind vor dem Sintern zu einem Braunling bereits im Grünling des Bohrkopfs 14 geformt worden.

In diesem Ausführungsbeispiel ist das Deckelement 24 wenigstens entlang des Schafts 12 als Hülse ausgebildet. Es ist einstückig und insbesondere aus einem Kunststoff ausgebildet.

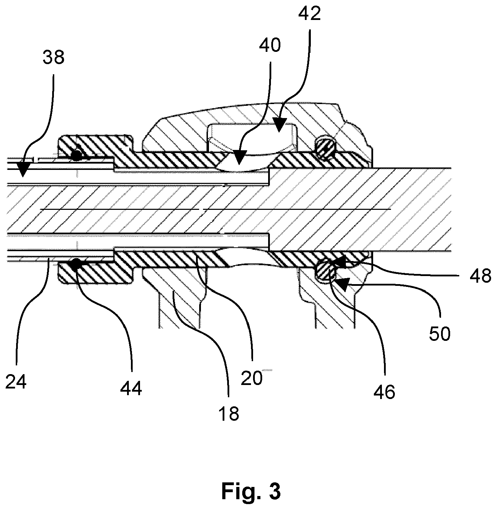

Eine vergrößerte Detailansicht eines Bereichs III aus Fig. 2 zeigt **Fig. 3****.**

Die Absaugkanäle 38, von denen wiederum vereinfachend lediglich einer in Fig. 3 mit einem Bezugszeichen versehen ist, münden über Verbindungsöffnungen **40** im Absaugadapter 20 in einen Sammelraum **42** des Absaugstutzens 18. Der Sammelraum 42 ist wiederum mit dem Sauganschluss 22 verbunden, sodass Bohrmehl entlang der Absaugkanäle 38 in den Sammelraum 42 und von dort in ein an den Sauganschluss 22 angeschlossenes Sauggerät, welches in Fig. 3 nicht dargestellt ist, abtransportiert werden kann.

Der Absaugadapter 20 ist drehfest mit dem Schaft 12 verbunden. Ein radial umlaufender O-Ring **44** befindet sich zwischen dem Absaugadapter 20 und dem Deckelement 24. Ein elastischer Ring **46** in Form eines Gummirings sitzt in radial umlaufenden Radialnuten **48** und **50** des Absaugadapters bzw. des Absaugstutzens 18.

Damit benötigt der Absaugadapter 20 kein bewegliches, beispielsweise längsverschiebbares, Teil. Auch der Absaugstutzen 18 benötigt kein bewegliches, beispielsweise längsverschiebbares, Teil.

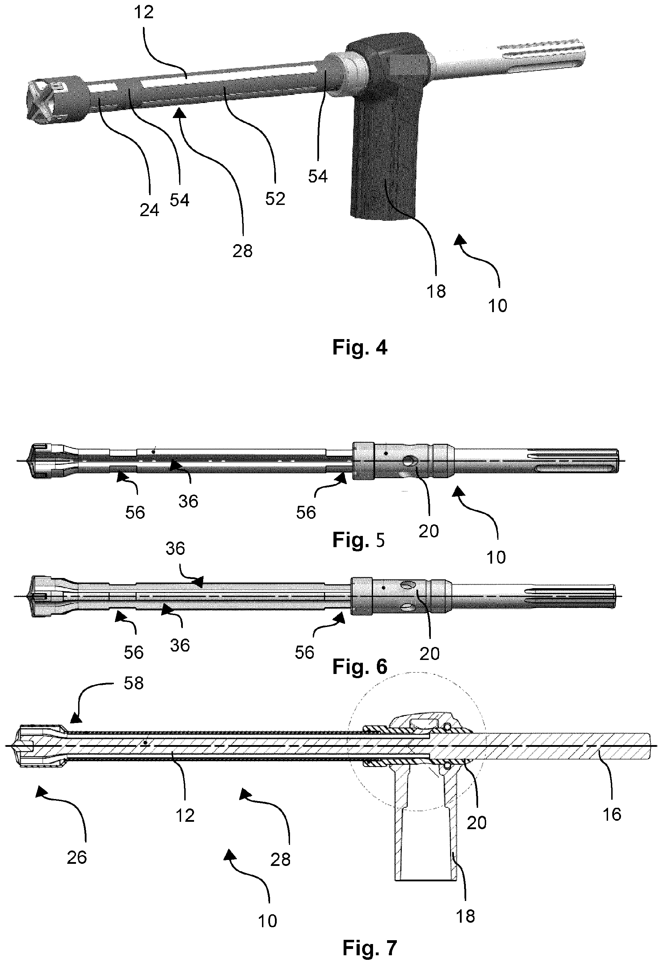

**Fig. 4** zeigt eine weitere Ausführungsform eines Saugbohrers 10, der an einen Absaugstutzen 18 angeschlossen ist. Soweit nicht anders beschrieben, können ein oder mehrere Merkmale dieser Ausführungsform mit den entsprechenden der vorangehend beschriebenen Ausführungsform übereinstimmen.

Ein Unterschied besteht darin, dass das Deckelement 24 zumindest in einem Bereich eine Gitterstruktur aufweist und insoweit nicht als Hülse ausgebildet ist. Es weist Teilelemente 52 auf, die die Nuten 36 (siehe Fig. 5) des Schaftabschnitts 28 jeweils einzeln abdecken. Zur Vereinfachung der Darstellung ist in Fig. 4 lediglich eines der Teilelemente 52 mit einem Bezugszeichen versehen.

Die Teilelemente 52 werden durch radial umlaufende Verbindungsringe **54** am Schaft 12 und damit auch aneinander gehalten. In dem in Fig. 4 gezeigten Ausführungsbeispiel sind die Teilelemente 52 über die Verbindungsringe 54 miteinander verbunden. Beispielsweise können die Teilelemente 52 und die Verbindungsringe 54 insgesamt als einstückiges Deckelement 24 ausgebildet sein. Denkbar ist alternativ, wenigstens einen der Verbindungsringe 54 als separaten Ring auszubilden.

Wenigstens eines der Teilelemente 52 kann einen Kunststoff umfassen.

**Fig. 5** und **Fig. 6****,** die jeweils perspektivische Seitenansichten des Saugbohrers 10 ohne Deckelement 24, jedoch mit Absaugadapter 20, aus verschiedenen Blickrichtungen zeigen, lassen erkennen, dass im Schaft 12 zwei Radialnuten **56** ausgebildet sind, sodass die Verbindungsringe 54 (siehe Fig. 4) in diesen sitzen können. So kann das Deckelement 24 gegen Verschieben gesichert sein.

**Fig. 7** zeigt eine Längsschnittansicht dieser Ausführungsform sowie des zugehörigen Absaugstutzens 18. Der Saugbohrer 10 weist insoweit eine hohe Ähnlichkeit zu den vorangehend beschriebenen Ausführungsformen auf.

Denkbar ist eine Variation, bei der, wie in Fig. 7 gezeigt, ein Übergangsbereich **58** zwischen dem Kopfabschnitt 26 und dem Schaftabschnitt 28 steiler ausgebildet ist als in der Ausführungsform gemäß Fig. 2.

Denkbar ist eine weitere Variation, bei der, wie in Fig. 7 gezeigt, der Absaugadapter 20 auf der Seite des Einsteckendes 16 über den Absaugstutzen 18 hinausragt anstatt, wie in Fig. 2 abgebildet, mit Letzterem bündig abzuschließen. So kann der Schaft 12 noch stabiler im Absaugadapter 18 geführt sein.

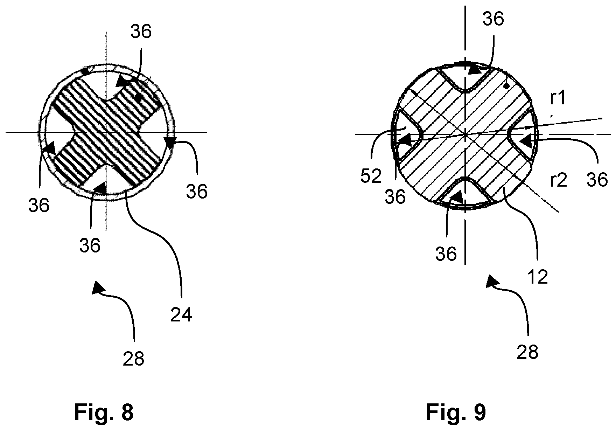

**Fig. 8** und **Fig. 9** zeigen Querschnitte des Schaftabschnitts 28 der Ausführungsform gemäß Fig. 1 bzw. gemäß Fig. 4.

In der Ausführungsform gemäß Fig. 1, siehe Fig. 8, bildet das Deckelement 24 im Bereich des Schaftabschnitts 28 eine Hülse und überdeckt dadurch gesamthaft alle Nuten 36 des Schaftabschnitts 28.

In der Ausführungsform gemäß Fig. 4, siehe Fig. 9, kleidet jedes der Teilelemente 52 eine der Nuten 36 des Schaftabschnitts 28 aus. Dazu ist jedes der Teilelemente 52 als Röhre mit abgerundet-dreieckigem Querschnitt ausgebildet. Vorzugsweise ist ein Außenradius **r1** der Teilelemente 52 kleiner als ein maximaler Radius **r2** des Schafts 12. Die Teilelemente 52 liegen somit vorzugsweise innerhalb des vom Schaft 12 einbeschriebenen Umfangskreises.

### Bezugszeichenliste

- 10: Saugbohrer
- 12: Schaft
- 14: Bohrkopf
- 16: Einsteckende
- 18: Absaugstutzen
- 20: Absaugadapter
- 22: Sauganschluss
- 24: Deckelement
- 26: Kopfabschnitt
- 28: Schaftabschnitt
- 30: Schneide
- 32: Stirnseite
- 34: Nute
- 36: Nute
- 38: Absaugkanal
- 40: Verbindungsöffnung
- 42: Sammelraum
- 44: O-Ring
- 46: elastischer Ring
- 48, 50: Radialnute
- 52: Teilelement
- 54: Verbindungsring
- 56: Radialnute
- 58: Übergangsbereich
- III: Bereich
- L: Längsachse
- d1: Durchmesser
- d2: Durchmesser
- r1: Außenradius
- r2: Radius

## Patentansprüche

1. **Saugbohrer (10)** zum Bohren von Gestein, umfassend einen Schaft (12), einen Bohrkopf (14) und ein Einsteckende (16), wobei entlang des Bohrkopfs (14) und entlang des Schafts (12) wenigstens jeweils eine Nute (34, 36) ausgebildet ist, wobei die Nuten (34, 36) im Bohrkopf (14) sowie im Schaft (12) zumindest teilweise durch wenigstens ein Deckelement (24) bedeckt sind.

2. Saugbohrer (10) nach dem vorhergehenden Anspruch, **dadurch gekennzeichnet, dass** das Deckelement (24) einen Kopfabschnitt (26) und einen Schaftabschnitt (28) aufweist, wobei ein maximaler Durchmesser (d1) des Schaftabschnitts (28) kleiner als ein maximaler Durchmesser (d1) des Kopfabschnitts (26) ist.

3. Saugbohrer (10) nach einem der vorhergehenden Ansprüche, **dadurch gekennzeichnet, dass** der Bohrkopf (14) gesintert ist, wobei die Nute (34, 36) am Bohrkopf (14) durch Formung des Grünlings des Bohrkopfs (14) ausgebildet ist.

4. Saugbohrer (10) nach einem der vorhergehenden Ansprüche, **dadurch gekennzeichnet, dass** wenigstens eine Nute (34, 36) des Bohrkopfs (14) mit wenigstens einer Nute (34, 36) des Schafts (12) fluchtet.

5. Saugbohrer (10) nach einem der vorhergehenden Ansprüche, **dadurch gekennzeichnet, dass** das Deckelement (24) wenigstens entlang des Schafts (12) als Hülse ausgebildet ist.

6. Saugbohrer (10) nach einem der vorhergehenden Ansprüche, **dadurch gekennzeichnet, dass** das Deckelement (24) zumindest in einem Bereich (III) eine Gitterstruktur aufweist.

7. Saugbohrer (10) nach einem der vorhergehenden Ansprüche, **dadurch gekennzeichnet, dass** das Deckelement (24) wenigstens eine Nute (34, 36) als Röhre auskleidet.

8. Saugbohrer (10) nach einem der vorhergehenden Ansprüche, **dadurch gekennzeichnet, dass** das Deckelement (24) wenigstens in einem Abschnitt aus einem Kunststoff ausgebildet ist.

9. Saugbohrer (10) nach einem der vorhergehenden Ansprüche, **dadurch gekennzeichnet, dass** das Deckelement (24) des Schafts (12) mehrere Teilelemente (52) umfasst.

10. Saugbohrer (10) nach einem der vorhergehenden Ansprüche, **dadurch gekennzeichnet, dass** am Schaft (12) ein Absaugadapter (20) drehfest angeordnet ist, wobei der Absaugadapter (20) wenigstens eine radial rundum laufende Nute (34, 36) aufweist.

11. **Absaugstutzen** (18) für einen Saugbohrer (10) nach einem der vorhergehenden Ansprüche, **dadurch gekennzeichnet, dass** am Absaugstutzen (18) wenigstens ein elastischer Ring (46) sitzt.
